# FASCICULE DE BREVET EUROPEEN

(11) **EP 2 492 049 B1**
(45) Date de publication et mention de la délivrance du brevet: **03.02.2016**
(21) Numéro de dépôt: 12156677.2
(22) Date de dépôt: 23.02.2012
(51) Int. Cl.: B23Q 17/22, G01B 3/30, G01B 21/04

(54) **Dispositif et procédé de calibration pour machine-outil**
Vorrichtung und Verfahren zur Eichung einer Werkzeugmaschine
Calibration device and method for a machine-tool

(30) Priorité: 28.02.2011 FR 1100597
(43) Date de publication de la demande: 29.08.2012
(73) Titulaire: Centre Technique de l'Industrie du Décolletage, 74300 Cluses (FR)
(72) Inventeur: Chatain, Richard, 74301 Cluses (FR)
(74) Mandataire: Sogan, Gloria

(56) Documents cités:
- US-A- 5 313 410
- US-A1- 2007 084 072

## Description

La présente invention concerne un dispositif et un procédé pour le calibrage de haute précision et en cours de production d'une machine-outil.

L'usinage de haute précision requiert de déterminer avec exactitude le déplacement dans l'espace du support d'outil selon une trajectoire déterminée jusqu'à un point précis d'une pièce. Cette précision dépend de son étalonnage. L'étalonnage consiste à apporter des corrections au modèle de la machine afin qu'il représente la cinématique réelle. Les erreurs responsables de la majorité des déviations sont principalement de deux types : les défauts constants et ceux évoluant avec l'usinage, tels que ceux engendrés par les variations de température. Une méthode de vérification de la calibration de machines-outils est par exemple décrite dans le document US 5,313,410.

Afin de garantir la précision du positionnement du support d'outil, une solution consiste à calibrer régulièrement la machine-outil pour compenser d'éventuelles erreurs.

Une méthode connue pour le calibrage de la machine-outil consiste à réaliser une série de déplacements de l'outil entre vingt-et-un point de référence disposés selon une configuration géométrique définie et de recueillir des matrices de compensation de défauts relatifs à l'outil à chaque point de référence. Les défauts de la matrice de compensation regroupent les défauts de position, de tangage, lacet et roulis pour chaque axe, ainsi que les défauts de perpendicularité entre les trois axes. Généralement, ces vingt-et-un paramètres sont déterminés tous les 50 mm sur chaque axe avec des dispositifs de mesure haute précision tel qu'un laser à interférométrie.

La complexité de la mise en oeuvre de cette méthode nécessite l'immobilisation de la machine-outil sur au moins une journée, ce qui empêche son utilisation régulière, ainsi que la mise à disposition d'un personnel expert et de matériel spécifique, ce qui est très coûteux.

De cela résulte la réservation des calibrations de machine-outil à des cas exceptionnels de mise ou de remise en service après maintenance, par exemple suite à un incident de fonctionnement de la machine-outil ou après le remplacement d'éléments usés.

L'invention vise notamment à résoudre les inconvénients de l'état de la technique en proposant un dispositif et un procédé de calibration pour machine-outil permettant des calibrations rapides pouvant être mises en oeuvre régulièrement pour un usinage haute précision de la machine-outil.

A cet effet, l'invention a pour objet un dispositif de calibration destiné à être fixé sur une machine-outil présentant un support d'outil pilotable en déplacement au moins dans un plan défini par un premier et un deuxième axe perpendiculaires entre eux, caractérisé en ce qu'il comporte :
- une embase,
- au moins trois cales étalon principales fixées à ladite embase, lesdites cales étalon principales présentant une longueur caractéristique entre deux faces de référence opposées, et
- un capteur de position destiné à être monté dans ledit support d'outil pour indiquer la position des faces de référence des cales étalon principales, lesdites cales étalon principales étant agencées spatialement sur l'embase de sorte que :
   - la longueur caractéristique de la première cale étalon principale soit parallèle au premier axe de la machine-outil,
   - la longueur caractéristique de la deuxième cale étalon principale soit parallèle au deuxième axe de la machine-outil, et
   - la longueur caractéristique de la troisième cale étalon principale s'inscrive dans une direction parallèle à une hypoténuse d'un triangle rectangle dont les deux autres côtés sont respectivement parallèles aux premier et deuxième axes de la machine-outil.

En agençant dans l'espace des cales étalon de forme simple, peu couteuses et de haute précision et en les mesurant avec un capteur de position simple également dont le pilotage est assuré par la machine-outil, on accède rapidement et à moindre coût, aux principaux défauts identifiés comme susceptibles d'évoluer au cours de l'utilisation de la machine-outil, avec une précision équivalente à des dispositifs complexes et couteux de l'état de la technique.

La mesure des longueurs caractéristiques des cales étalon alignées selon la direction des axes de la machine-outil permet d'identifier un défaut d'allongement ou de rétractation selon chaque axe et la mesure de la longueur caractéristique de la troisième cale étalon principale transversale permet d'identifier un défaut de perpendicularité. On considère en effet que seuls les défauts d'allongement ou de rétractation suivant chaque axe de déplacement de la machine-outil et le défaut de perpendicularité entre les axes, peuvent évoluer au cours de l'usinage, les autres défauts tels que le tangage, lacet et roulis sont considérés comme constants et peuvent donc être compensés une fois pour toutes. La calibration réalisée avec le dispositif de calibration ne vise pas à corriger tous les défauts, mais permet de déterminer très précisément les défauts principaux responsables d'une perte de précision au cours de l'usinage.

Une calibration ne prenant que quelques dizaines de minutes peut alors être régulièrement effectuée. On peut ainsi planifier des calibrations régulières de la machine-outil, en interne et sans gêner la production, ce qui permet d'augmenter la précision du déplacement du support d'outil et donc de l'usinage réalisé par celui-ci avec un dispositif de calibration peu couteux.

En outre, un seul dispositif de calibration peut être utilisable sur plusieurs machines-outils.

Le dispositif de calibration peut comporter une cale étalon secondaire en appui sur au moins une face de référence d'une cale étalon principale, la cale étalon secondaire dépassant transversalement de la cale étalon principale pour présenter une face de référence au capteur de position. On améliore ainsi la précision de la mesure, car une des deux faces de référence de la cale étalon principale est « retournée » de manière à être présentée du même côté au capteur de position, et ainsi lui éviter une rotation qui diminuerait la précision de la mesure. En outre, lorsque le capteur de position est un comparateur, on s'assure de solliciter le capteur de position dans le même sens d'appui de sa tige.

Le dispositif de calibration comporte par exemple deux cales étalons secondaires en appui sur les deux faces de référence opposées d'au moins une cale étalon principale et le dispositif de calibration comporte en outre un support de capteur présentant une première extrémité destinée à être montée dans le support d'outil, une deuxième extrémité à laquelle le capteur de position est fixé, et une articulation coudée entre les deux extrémités. Ainsi, au lieu de mesurer tour à tour deux faces de référence opposées d'une cale étalon principale, on peut mesurer deux faces de référence situées d'un même côté, sur un même axe de déplacement de la machine-outil. On s'affranchit ainsi des erreurs de positionnement selon cet axe, ce qui permet de ne pas cumuler les erreurs du capteur de position à celles de la machine-outil.

Ladite embase peut également comporter une plaque de positionnement présentant des moyens de centrage pour positionner ledit dispositif de calibration à la machine-outil.

Par ailleurs, afin de ne pas appliquer de contraintes aux cales étalons secondaires qui pourraient modifier leurs dimensions, ladite cale étalon secondaire est par exemple maintenue en appui contre la cale étalon principale par la pointe d'une vis d'une patte de fixation dudit dispositif de calibration, ladite patte de fixation étant collée à ladite cale étalon principale. Les faces parfaitement planes des cales étalon en vis-à-vis les font naturellement adhérer entre elles de sorte qu'elles peuvent être maintenues ensemble simplement par une faible pression.

Egalement pour ne pas générer des contraintes, lesdites cales étalon principales peuvent présenter un moyen d'assemblage souple à ladite embase. Ainsi, la cale étalon principale est libre de se dilater ou se contracter sensiblement sans générer de contrainte sur le moyen d'assemblage souple.

Selon un mode de réalisation s'appliquant à une machine-outil présentant un support d'outil pilotable en déplacement selon un premier, un deuxième axe et un troisième axes perpendiculaires entre eux, le dispositif de calibration comporte six cales étalon principales spatialement agencées à l'embase de sorte que :
- la longueur caractéristique de la quatrième cale étalon principale soit parallèle au troisième axe de la machine-outil,
- la longueur caractéristique de la cinquième cale étalon principale s'inscrive dans une direction parallèle à une hypoténuse d'un triangle rectangle dont les deux autres côtés sont parallèles aux premier et troisième axes de la machine-outil, et
- la longueur caractéristique de la sixième cale étalon principale s'inscrive dans une direction parallèle à une hypoténuse d'un triangle rectangle dont les deux autres côtés sont parallèles aux deuxième et troisième axes de la machine-outil.

La mesure des longueurs caractéristiques des cales étalon alignées selon la direction des trois axes de la machine-outil permet d'identifier un défaut d'allongement ou de rétractation selon chaque axe. La mesure des longueurs caractéristiques des autres cales étalon principale transversales, permet d'identifier les trois défauts de perpendicularité. On accède ainsi aux six principaux défauts : allongement ou de rétractation selon chacun des trois axes et trois défauts d'équerrage.

Ledit support présente par exemple une première, une deuxième et une troisième poutres orthogonales entre elles et agencées dans une forme générale en coin.

L'invention a aussi pour objet un procédé de calibration d'une machine-outil caractérisé en ce que:
- on monte un capteur de position dans un support d'outil de la machine-outil et on fixe le dispositif de calibration tel que décrit précédemment à la machine-outil dans une position accessible au support d'outil,
- on commande le déplacement du support d'outil dans une première direction parallèle à la longueur caractéristique d'une première cale étalon principale pour déterminer la valeur du déplacement du support d'outil entre deux faces de référence de l'assemblage de cales étalon,
- on réitère le déplacement du support d'outil selon la direction parallèle à la longueur caractéristique de chaque cale étalon principale pour déterminer la valeur du déplacement du support d'outil entre deux faces de référence de l'assemblage de cales étalon,
- on détermine les défauts d'allongement et de rétractation sur chaque axe à partir de l'écart entre la valeur de la longueur caractéristique de l'assemblage de cales étalon et la valeur du déplacement du support d'outil donné par la machine-outil,
- on détermine le défaut d'équerrage en tenant compte des défauts d'allongement et de rétractation sur chaque axe, et
- on corrige les valeurs de commande en déplacement du support d'outil.

D'autres avantages et caractéristiques apparaîtront à la lecture de la description de l'invention donnée à titre d'exemple ainsi que des dessins annexés sur lesquels :
- la figure 1 est une vue schématique en perspective de dessus d'un dispositif de calibration selon un premier mode de réalisation posé à plat pour une machine-outil comportant un support d'outil pilotable en déplacement dans un plan (X, Y),
- la figure 2 représente une vue de dessous du dispositif de calibration de la figure 1,
- la figure 3 est une vue du dispositif de calibration de la figure 1 posé sur la tranche,
- la figure 4 est une vue en perspective d'un capteur de position monté dans un support de capteur,
- la figure 5 représente un organigramme d'un procédé de calibration d'une machine-outil,
- la figure 6 est une vue schématique en perspective sensiblement de côté d'un dispositif de calibration selon un deuxième mode de réalisation posé à plat pour une machine-outil comportant un support d'outil pilotable en déplacement dans un repère (X, Y, Z),
- la figure 7 est une vue de côté du dispositif de calibration de la figure 6,
- la figure 8 est une vue en perspective sensiblement de dessus du dispositif de calibration de la figure 6,
- la figure 9 est une vue de dessus du dispositif de calibration de la figure 6, et
- la figure 10 est une vue en perspective sensiblement de dessous du dispositif de calibration de la figure 6.

Sur ces figures, les éléments identiques portent les mêmes numéros de référence. La face « inférieure » correspond à la face du support configurée pour être fixée à la machine-outil.

Le dispositif de calibration 1 est destiné à être fixé à un mandrin d'une machine-outil à une position accessible au support d'outil de la machine-outil.

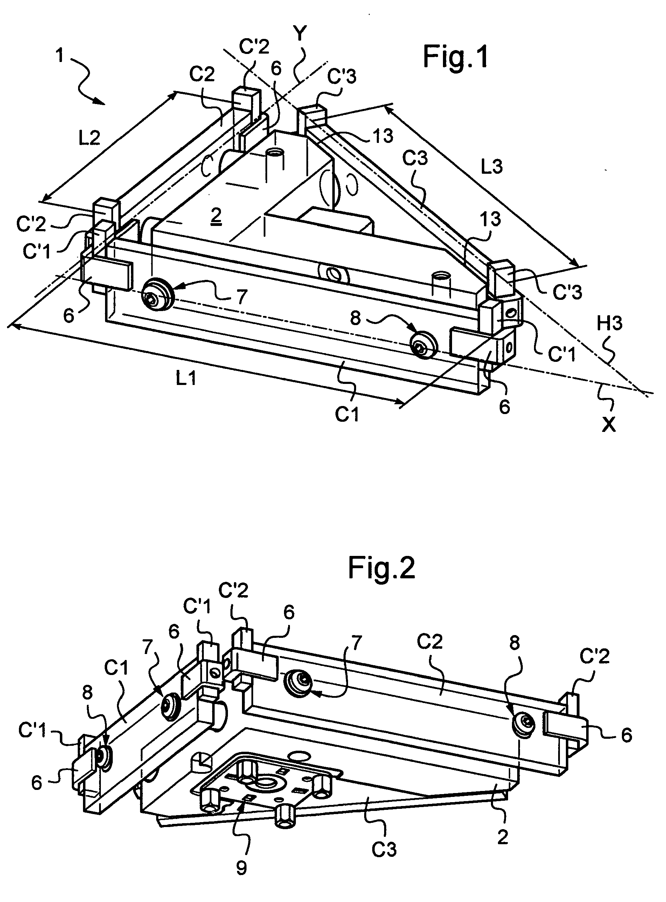

Les figures 1, 2 et 3 représente un premier mode de réalisation d'un dispositif de calibration 1 pour un support d'outil pilotable en déplacement dans un plan (X, Y) défini par un premier et un deuxième axes X, Y perpendiculaires entre eux.

La machine-outil est par exemple une machine de tournage pour l'usinage d'une pièce fixée dans un mandrin rotatif. Le dispositif de calibration 1 est alors fixé sur le mandrin à la place de la pièce à usiner.

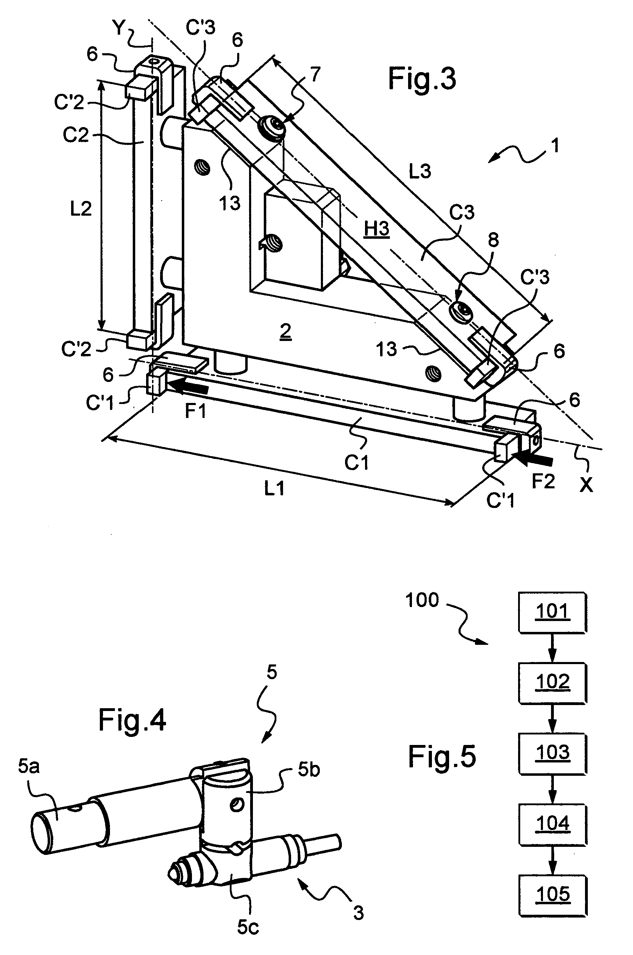

Le dispositif de calibration 1 comporte une embase 2, par exemple en acier, au moins trois cales étalon principales C1, C2, C3 fixées à l'embase 2 et un capteur de position 3 (figure 4).

De façon connue en soi, les cales étalon sont des pièces standard parallélépipédiques à bouts plans parallèles, usinées dans un matériau dur et peu sensible aux variations environnementales, dont au moins une dimension est déterminée avec la plus grande précision par un usinage extrêmement précis de deux de ses faces de référence opposées. Les cales étalon principales C1, C2, C3 présentent ainsi chacune une longueur caractéristique entre deux faces de référence opposées, telles que celles situées sur les petits côtés opposés du parallélépipède. On utilise par exemple des cales étalon de classe 1, c'est-à-dire présentant une précision d'usinage de l'ordre de +/- 0, 6 µm. La longueur de la cale étalon principale est choisie la plus grande possible suivant la longueur de la course du support d'outil. Par exemple, la longueur caractéristique de la cale étalon principale est de l'ordre de 100 mm.

Le capteur de position 3 est destiné à être monté dans le support d'outil pour indiquer la position des faces de référence des cales étalon principales C1, C2, C3. La valeur du déplacement du support d'outil dans la direction de la longueur caractéristique de la cale étalon principale permet d'en déduire la longueur caractéristique « lue » par la machine-outil.

Le capteur de position 3 est par exemple un comparateur (également dénommé palpeur), indiquant une mesure relative par rapport à un point de référence. C'est un capteur simple et peu coûteux. De façon connue en soi, le comparateur comporte une tige mobile en translation dont l'extrémité comporte une touche. Pour effectuer une mesure, on pilote le support d'outil jusqu'à ce que la touche du comparateur détecte une face de référence d'une cale étalon. Pour augmenter la précision du capteur de position 3, on peut le calibrer sur une portion de sa plage complète de mesure.

Comme on peut le voir sur les figures 1 à 3, l'embase 2 présente une forme générale en L et les cales étalon principales C1, C2, C3 sont agencées spatialement sur l'embase 2 de sorte que :
- la longueur caractéristique de la première cale étalon principale C1 soit parallèle au premier axe X de la machine-outil,
- la longueur caractéristique de la deuxième cale étalon principale C2 soit parallèle au deuxième axe Y de la machine-outil, et
- la longueur caractéristique de la troisième cale étalon principale C3 s'inscrive dans une direction parallèle à une hypoténuse H3 d'un triangle rectangle dont les deux autres côtés sont respectivement parallèles aux premier et deuxième axes X, Y de la machine-outil.

Pour améliorer la précision de la mesure, on prévoit que le dispositif de calibration 1 comporte une cale étalon secondaire en appui sur une face de référence de chaque cale étalon principale.

Chaque cale étalon secondaire dépasse transversalement de la cale étalon principale correspondante pour présenter une face de référence au capteur de position 3. Ainsi, une des deux faces de référence de la cale étalon principale est « retournée » de manière à être présentée du même côté au capteur de position 3, et ainsi lui éviter une rotation qui diminuerait la précision de la mesure. En outre, lorsque le capteur de position 3 est un comparateur, on s'assure de solliciter le capteur de position dans le même sens d'appui de la tige.

Pour améliorer encore la précision de la mesure, on prévoit que le dispositif de calibration 1 comporte deux cales étalon secondaire C'1, C'2, C'3 en appui sur chacune des deux faces de référence opposées de chaque cale étalon principale C1, C2, C3 (figures 1 à 3). Le dispositif de calibration 1 comporte ainsi six cales étalon secondaires C'1, C'2, C'3, standard parallélépipédiques à bouts plans parallèles, présentant chacune une longueur caractéristique par exemple entre deux faces de référence opposées situées sur les grands côtés opposés du parallélépipède.

Les cales étalon secondaires C'1-C'3 sont similaires aux cales étalon principales C1-C6 mais présentent des dimensions réduites par rapport à ces dernières. La longueur de la cale étalon secondaire est par exemple de l'ordre de grandeur de la largeur de la cale étalon principale. Dans l'exemple représenté sur les figures, les cales étalon secondaires sont identiques.

En outre, le dispositif de calibration 1 est muni d'un support de capteur 5 présentant une première extrémité 5a destinée à être montée dans le support d'outil, une deuxième extrémité 5c à laquelle le capteur de position 3 est fixé et une articulation coudée 5b entre les deux extrémités 5a, 5c (figure 4). L'articulation 5b permet au capteur de position 3 d'accéder aux faces de référence de deux cales étalons secondaires C'1, C'2, C'3 des cales étalons principales C1, C2, C3 sans modifier la direction de déplacement du support d'outil. La longueur caractéristique totale L1, L2, L3 (figures 1 et 3) est alors déduite des mesures du capteur de position 3 de chaque assemblage de cales étalon. Elle est équivalente à la somme de la longueur caractéristique de la cale étalon principale C1, C2 ou C3 et de la longueur caractéristique d'une cale étalon secondaire C'1, C'2 ou C'3.

Ainsi, au lieu de mesurer tour à tour deux faces de référence opposées d'une cale étalon principale C1-C6, on peut mesurer deux faces de référence situées d'un même côté, sur un même axe. On s'affranchit ainsi des erreurs de positionnement selon cet axe.

Par exemple, pour la mesure de la cale étalon principale C1, le support d'outil déplace le capteur de position 3 vers une première face de référence aux coordonnées X1, Y1. Puis, le support d'outil est commandé en déplacement dans une direction parallèle à l'axe X de la machine-outil, pour mesurer une deuxième face de référence aux coordonnées X2, Y1. La valeur du déplacement du support d'outil est déduite des coordonnées X1 et X2 sans tenir compte des coordonnées Y1, Y2, inchangées. De fait, le défaut de parallélisme de la cale étalon principale C1 avec l'embase 2 n'a qu'une incidence très faible et cette erreur d'orientation devient alors négligeable par rapport aux erreurs de positionnement du support d'outil à compenser (le rapport est de l'ordre de 100).

Les cales étalon secondaire C'1-C'3 déportent ainsi les faces de référence, ce qui permet de ne pas cumuler les erreurs du capteur de position 3 à celles de la machine-outil. On améliore ainsi la qualité de la prise de mesure à une précision de l'ordre de +/-0, 3 µm sur une petite course d'une plage de mesure de 2 mm.

Par ailleurs, afin de ne pas appliquer de contraintes aux cales étalons secondaires qui pourraient modifier leurs dimensions, les cales étalon secondaire C'1, C'2, C'3 sont maintenues en appui contre la cale étalon principale correspondante C1, C2 ou C3 par une faible pression. Le dispositif de calibration 1 peut ainsi comporter une patte de fixation 6, par exemple en aluminium, dotée d'une vis, par exemple en plastique. La pointe de la vis appuie sur la cale étalon secondaire C'1, C'2, C'3 tandis que la patte de fixation prend la cale étalon secondaire en étau, une branche de l'étau étant collée sur une face latérale de la cale étalon principale C1, C2, C3. Les faces parfaitement planes des cales étalon en vis-à-vis les font naturellement adhérer entre elles de sorte qu'elles peuvent être maintenues ensemble simplement par une faible pression.

Egalement pour ne pas générer de contraintes, les cales étalon principales C1, C2, C3 peuvent présenter un moyen d'assemblage souple à l'embase 2. Ainsi, la cale étalon principale C1, C2, C3 est libre de se dilater ou se contracter sensiblement sans générer de contrainte sur le moyen d'assemblage souple.

Par exemple, les cales étalon principales C1, C2, C3 présentent un moyen d'assemblage rigide 7 comprenant un premier trou circulaire ménagé dans la cale étalon principale C1, C2, C3, s'ajustant avec une vis correspondante par l'intermédiaire d'une première entretoise épaulée. La vis traverse également une deuxième entretoise simple du dispositif de calibration 1 pour coopérer avec un taraudage correspondant ménagé dans l'embase 2. Les cales étalon principales C1, C2, C3 présentent en outre un moyen d'assemblage souple 8 comprenant un deuxième trou circulaire ménagé dans la cale étalon principale C1, C2, C3, présentant un diamètre plus grand que le diamètre du premier trou circulaire 7. Le deuxième trou circulaire peut être garni d'un matériau flexible, tel que du plastique, pour centrer la vis. Selon un autre exemple, le deuxième trou est oblong. Ainsi, le deuxième trou ne génère pas de contrainte sur la cale étalon principale C1, C2, C3 libre de se contracter sans resserrer la vis.

En outre, les moyens d'assemblage 7, 8 fixent chaque cale étalon principale C1, C2, C3 correspondante à plat, ce qui réduit l'encombrement du dispositif de calibration 1.

L'embase 2 peut également comporter, en face inférieure destinée à être fixée à la machine-outil, une plaque de positionnement 9 présentant des moyens de centrage pour bien positionner l'embase 2 (figure 2). Les moyens de centrage sont destinés à coopérer avec des moyens de centrage complémentaires portés par la machine-outil pour positionner le dispositif de calibration 1 avec précision de l'ordre de +/-1µm.

Au cours d'une calibration de la machine-outil, on met en oeuvre le procédé de calibration 100 illustré en figure 5.

Dans une première étape 101, on monte le capteur de position 3 dans le support d'outil de la machine-outil via le support d'outil 5 et on fixe le dispositif de calibration 1 à la machine-outil dans une position accessible au support d'outil.

Puis, au cours d'une deuxième étape 102, on commande le déplacement du support d'outil dans une première direction X parallèle à la longueur caractéristique d'une première cale étalon principale C1 pour déterminer le déplacement du support d'outil entre deux faces de référence de l'assemblage des premières cales étalon principale et secondaire C1 et C'1.

Plus précisément, on commande le déplacement du support d'outil dans selon le premier axe X de la machine-outil pour mesurer la position de la première face de référence de la cale étalon secondaire C'1 (voir flèche F1 sur la figure 3), puis de la deuxième face de référence de la cale étalon secondaire C'1 (voir flèche F2) sans modifier la direction de déplacement du support d'outil selon le premier axe X. La longueur caractéristique L1 de l'assemblage des premières cales étalon C1, C'1 équivaut à la somme de la longueur caractéristique de la cale étalon principale C1 et de la longueur caractéristique de la cale étalon secondaire C'1.

Puis, on réitère le déplacement du support d'outil selon le deuxième axe Y et selon la direction H3 parallèle à la longueur caractéristique de la troisième cale étalon principale C3 pour déterminer le déplacement du support d'outil entre les deux faces de référence des assemblages de cales étalon C2-C'2 et C3-C'3.

Puis, au cours d'une troisième étape 103, on détermine les défauts d'allongement et de rétractation sur chaque axe X, Y à partir de l'écart entre la valeur de la longueur caractéristique de l'assemblage de cales étalon et la valeur du déplacement du support d'outil donné par la machine-outil.

Dans une quatrième étape 104, on détermine le défaut d'équerrage en tenant compte des défauts d'allongement et de rétractation sur chaque axe Y, Y.

Puis dans une dernière étape 105, on corrige les valeurs de commande en déplacement du support d'outil.

En agençant dans l'espace des cales étalon de forme simple, peu couteuses et de haute précision et en les mesurant avec un capteur de position 3 simple également dont le pilotage est assuré par la machine-outil, on accède rapidement et à moindre coût, aux principaux défauts identifiés comme susceptibles d'évoluer au cours de l'utilisation de la machine-outil, avec une précision équivalente à des dispositifs complexes et couteux de l'état de la technique.

La mesure des longueurs caractéristiques des cales étalon principales C1, C2 alignées selon la direction des axes X, Y de la machine-outil permet d'identifier un défaut d'allongement ou de rétractation selon chaque axe X, Y et la mesure de la longueur caractéristique de la troisième cale étalon principale C3 transversale permet d'identifier un défaut de perpendicularité. On considère en effet que seuls les défauts d'allongement ou de rétractation suivant chaque axe de déplacement X, Y de la machine-outil et le défaut de perpendicularité entre les axes X, Y, peuvent évoluer au cours de l'usinage, les autres défauts tels que le tangage, lacet et roulis sont considérés comme constants et peuvent donc être compensés une fois pour toutes. La calibration réalisée avec le dispositif de calibration 1 ne vise pas à corriger tous les défauts, mais permet de déterminer très précisément les défauts principaux responsables d'une perte de précision au cours de l'usinage.

Une calibration ne prenant que quelques dizaines de minutes peut alors être régulièrement effectuée. On peut ainsi planifier des calibrations régulières de la machine-outil, en interne et sans gêner la production, ce qui permet d'augmenter la précision du déplacement du support d'outil et donc de l'usinage réalisé par celui-ci avec un dispositif de calibration 1 peu couteux. En outre, un seul dispositif de calibration 1 peut être utilisable sur plusieurs machines-outils.

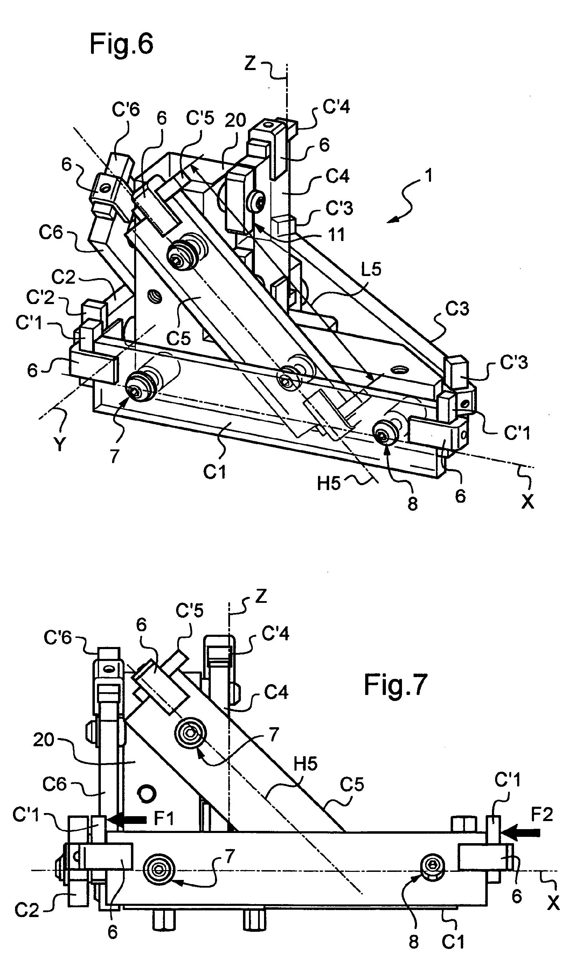

Selon un deuxième mode de réalisation représenté sur les figures 6 à 10, le dispositif de calibration 10 est destiné à être fixé à une machine-outil dont le support d'outil est pilotable en déplacement dans le repère défini par un premier, un deuxième et un troisième axes perpendiculaires entre eux X, Y, Z. Seuls les éléments différents du premier mode de réalisation vont être décrits.

La machine-outil est par exemple un centre d'usinage pour l'usinage d'une pièce fixée dans un mandrin. Le dispositif de calibration 10 est par exemple fixé au mandrin à la place de la pièce à usiner.

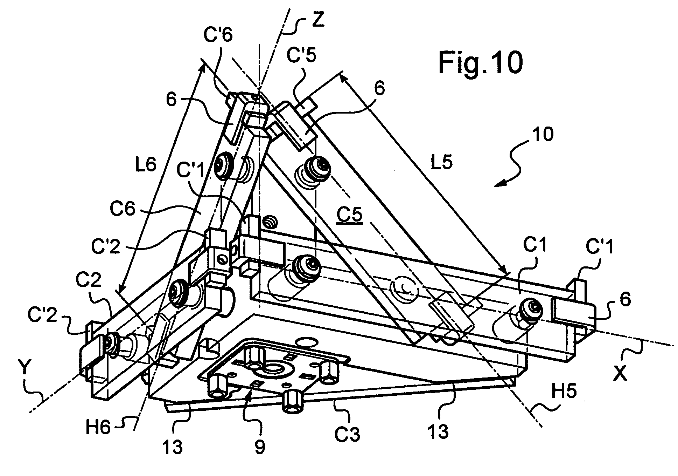

Comme on peut le voir sur les figures 6 à 10, l'embase 20 du dispositif de calibration 10 présente une forme générale en coin et le dispositif de calibration 10 comporte six cales étalon principales C1, C2, C3, C4, C5, C6 spatialement agencées à l'embase 20 de sorte que :
- la longueur caractéristique de la quatrième cale étalon principale C4 soit parallèle au troisième axe Z de la machine-outil,
- la longueur caractéristique de la cinquième cale étalon principale C5 s'inscrive dans une direction parallèle à une hypoténuse H5 d'un triangle rectangle dont les deux autres côtés sont parallèles aux premier et troisième axes X, Z de la machine-outil (figures 6, 7, 10), et
- la longueur caractéristique de la sixième cale étalon principale C6 s'inscrive dans une direction parallèle à une hypoténuse H6 d'un triangle rectangle dont les deux autres côtés sont parallèles aux deuxième et troisième axes Y, Z de la machine-outil (figure 10).

La première cale étalon principale C1, la deuxième cale étalon principale C2 et la troisième cale étalon principale C3 sont agencées à l'embase 20 comme précédemment.

Egalement, le dispositif de calibration 1 comporte deux cales étalons secondaires C'1, C'2, C'3, C'4, C'5, C'6 en appui sur chacune des deux faces de référence opposées de chaque cale étalon principale C1-C6. Le dispositif de calibration 1 comporte ainsi douze cales étalon secondaires C'1-C'6 pour la mesure des six longueurs caractéristiques totales L4, L5, L6 déduite des mesures du capteur de position 3 sur chaque assemblage de cale étalon (figures 6 et 10).

Par exemple, l'embase 20 présente une première, une deuxième et une troisième poutres B1, B2, B3 orthogonales entre elles agencées en coin, les cales étalon principales C1-C6 étant fixées aux poutres B1, B2, B3.

La première, la deuxième et la quatrième cales étalons principales C1, C2, C4 sont respectivement parallèles à la première, deuxième et troisième poutre B1, B2, B3.

La première et la deuxième cales étalons principales C1, C2 sont par exemple fixées sur une face extérieure respective de la première et de la deuxième poutre B1, B2.

La quatrième cale étalon principale est fixée sur une face intérieure de la troisième poutre B3 (on désigne les faces extérieures celles situées sur les côtés opposées des faces formant l'angle entrant du support tridimensionnel 2).

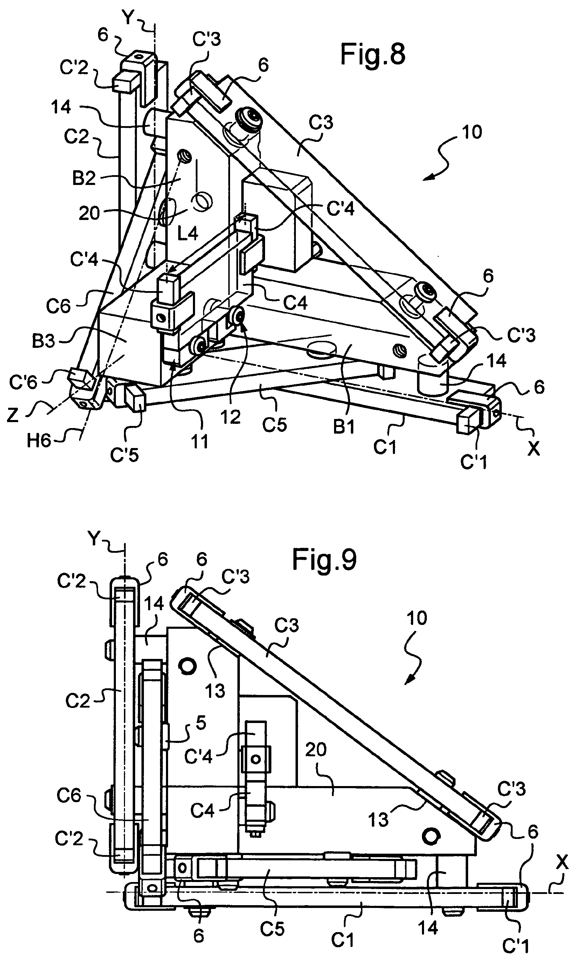

La quatrième cale étalon principale C4 présente un moyen d'assemblage rigide 11 comprenant un étrier fixé à l'embase 20 par une vis et par exemple collé sur la tranche de la cale étalon principale C4 (figure 8). Elle présente en outre un moyen d'assemblage souple 12 comprenant un doigt élastique appuyant sur la tranche.

Ainsi, le doigt élastique ne génère pas de contrainte sur la cale étalon principale C4, libre de se dilater. Ce moyen d'assemblage souple 12 convient particulièrement pour les cales non disponibles percées dans le commerce comme c'est le cas pour la quatrième cale étalon principale C4, plus courte que les autres pour être compatible avec la course selon le troisième axe Z de la machine-outil.

La troisième cale étalon principale C3 est fixée en diagonale à des chanfreins 13 de la première et deuxième poutre B1, B2.

La cinquième cale étalon principale C5 est fixée en diagonale à la première et troisième poutre B1, B3, sur la face extérieure de la première poutre B1 entre la première poutre B1 et la première cale étalon principale C1 et sur une première face extérieure de la troisième poutre B3.

La sixième cale étalon principale C6 est fixée en diagonale à la deuxième et troisième poutre B2, B3, sur la face extérieure de la deuxième poutre B2 entre la deuxième poutre B2 et la deuxième cale étalon principale C2 et sur une deuxième face extérieure de la troisième poutre B3. De longues entretoises 14 sont utilisées pour interposer la cinquième cale étalon principale C5 entre l'embase 20 et la première cale étalon principale C1 et la sixième cale étalon principale C6 entre l'embase 20 et la deuxième cale étalon principale C2 (figures 8 et 9).

Cet agencement permet de limiter l'encombrement du dispositif de calibration 1.

Au cours d'une calibration de la machine-outil (100), on réitère le déplacement du support d'outil selon la direction parallèle à la longueur caractéristique des six cales étalons principales C1-C6 pour déterminer le déplacement du support d'outil entre les deux faces de référence des assemblages de cales étalon.

Puis, on détermine les défauts d'allongement et de rétractation sur chaque axe X, Y, Z à partir de l'écart entre la valeur de la longueur caractéristique de l'assemblage de cales étalon et la valeur déterminée du déplacement du support d'outil donné par la machine-outil (étape 103).

Dans une quatrième étape 104, on détermine le défaut d'équerrage en tenant compte des défauts d'allongement et de rétractation sur chaque axe X, Y, Z. Puis dans une dernière étape 105, on corrige les valeurs de commande en déplacement du support d'outil.

La mesure des longueurs caractéristiques des cales étalon C1, C2, C3 alignées selon la direction des axes de la machine-outil Y, Y, Z permet d'identifier un défaut d'allongement ou de rétractation selon chaque axe X, Y, Z. La mesure des longueurs caractéristiques des autres cales étalon principale C4, C5, C6 transversales, permet d'identifier les trois défauts de perpendicularité. On accède ainsi aux six principaux défauts : allongement ou de rétractation selon chacun des trois axes X, Y et Z et trois défauts d'équerrage : c'est-à-dire le défaut de perpendicularité de l'axe X avec le plan (Y, Z), le défaut de perpendicularité de l'axe Y avec le plan (X, Z) et le défaut de perpendicularité de l'axe Z avec le plan (X, Y).

## Revendications

1. Dispositif de calibration destiné à être fixé sur une machine-outil présentant un support d'outil pilotable en déplacement au moins dans un plan (X, Z défini par un premier et un deuxième axe perpendiculaires (X, Z entre eux, comportant une embase (2, 20) et un capteur de position (3) destiné à être monté dans ledit support d'outil, **caractérisé en ce qu'**il comporte :
- au moins trois cales étalon principales (C1, C2, C3) fixées à ladite embase (2, 20), lesdites cales étalon principales (C1, C2, C3) présentant une longueur caractéristique entre deux faces de référence opposées, et le capteur de position (3) pouvant indiquer la position des faces de référence des cales étalon principales (C1, C2, C3), lesdites cales étalon principales (C1, C2, C3) étant agencées spatialement sur l'embase (2, 20) de sorte que :
- la longueur caractéristique de la première cale étalon principale (C1) soit parallèle à un premier axe (X),
- la longueur caractéristique de la deuxième cale étalon principale (C2) soit parallèle à un deuxième axe (Y), perpendiculaire au premier axe (X), et
- la longueur caractéristique de la troisième cale étalon principale (C3) s'inscrive dans une direction parallèle à une hypoténuse (H3) d'un triangle rectangle dont les deux autres côtés sont respectivement parallèles aux premier et deuxième axes (X, Y).

2. Dispositif de calibration selon la revendication 1, **caractérisé en ce qu'**il comporte une cale étalon secondaire (C'1, C'2, C'3) en appui sur au moins une face de référence d'une cale étalon principale (C1, C2, C3), la cale étalon secondaire (C'1, C'2, C'3) dépassant transversalement de la cale étalon principale (C1, C2, C3) pour présenter une face de référence au capteur de position (3).

3. Dispositif de calibration selon la revendication 2, **caractérisé en ce qu'**il comporte deux cales étalons secondaires (C'1, C'2, C'3) en appui sur les deux faces de référence opposées d'au moins une cale étalon principale (C1, C2, C3) et **en ce que** le dispositif de calibration (1, 10) comporte en outre un support de capteur (5) présentant une première extrémité (5a) destinée à être montée dans le support d'outil, une deuxième extrémité (5c) à laquelle le capteur de position (3) est fixé et une articulation coudée (5b) entre les deux extrémités (5a, 5c).

4. Dispositif de calibration selon l'une des revendications 2 ou 3, **caractérisé en ce que** ladite cale étalon secondaire (C'1, C'2, C'3) est maintenue en appui contre la cale étalon principale (C1, C2, C3) par la pointe d'une vis d'une patte de fixation (6) dudit dispositif de calibration (1, 10), ladite patte de fixation (6) étant collée à ladite cale étalon principale (C1, C2, C3).

5. Dispositif de calibration selon l'une des revendications 1 à 4, pour machine-outil présentant un support d'outil pilotable en déplacement selon un premier, un deuxième axe et un troisième axes perpendiculaires entre eux (X, Y, Z), **caractérisé en ce qu'**il comporte six cales étalon principales (C1, C2, C3, C4, C5, C6) spatialement agencées à l'embase (20) de sorte que :
- la longueur caractéristique de la quatrième cale étalon principale (C4) soit parallèle à un troisième axe (Z) perpendiculaire au premier et au deuxième axe (X, Y),
- la longueur caractéristique de la cinquième cale étalon (C5) principale s'inscrive dans une direction parallèle à une hypoténuse (H5) d'un triangle rectangle dont les deux autres côtés sont parallèles aux premier et troisième axes (X, Z), et
- la longueur caractéristique de la sixième cale étalon principale (C6) s'inscrive dans une direction parallèle à une hypoténuse (H6) d'un triangle rectangle dont les deux autres côtés sont parallèles aux deuxième et troisième axes (Y, Z).

6. Dispositif de calibration selon la revendication 5, **caractérisé en ce que** l'embase (20) présente une première, une deuxième et une troisième poutres (B1, B2, B3) orthogonales entre elles et agencées dans une forme générale en coin.

7. Dispositif de calibration selon l'une des revendications 1 à 6, **caractérisé en ce que** lesdites cales étalon principales (C1, C2, C3, C4, C5, C6) présentent un moyen d'assemblage souple (8, 12) à l'embase (2, 20).

8. Dispositif de calibration selon l'une des revendications 1 à 7, **caractérisé en ce que** l'embase (2, 20) comporte une plaque de positionnement (9) présentant des moyens de centrage pour positionner ledit dispositif de calibration (1, 10) à la machine-outil.

9. Dispositif de calibration selon l'une des revendications précédentes, **caractérisé en ce que** le capteur de position (3) est un comparateur.

10. Procédé de calibration d'une machine-outil **caractérisé en ce que**:
- on monte un capteur de position dans un support d'outil de la machine-outil et on fixe le dispositif de calibration selon l'une des revendications 1 à 9 dans une position accessible au support d'outil (étape 101),
- on commande le déplacement du support d'outil dans une première direction X parallèle à la longueur caractéristique d'une première cale étalon principale C1 pour déterminer la valeur du déplacement du support d'outil entre deux faces de référence de l'assemblage de cales étalon (étape 102),
- on réitère le déplacement du support d'outil selon la direction parallèle à la longueur caractéristique de chaque cale étalon principale pour déterminer la valeur du déplacement du support d'outil entre deux faces de référence de l'assemblage de cales étalon (étape 102),
- on détermine les défauts d'allongement et de rétractation sur chaque axe à partir de l'écart entre la valeur de la longueur caractéristique de l'assemblage de cales étalon et la valeur déterminée du déplacement du support d'outil donné par la machine-outil (étape 103),
- on détermine le défaut d'équerrage en tenant compte des défauts d'allongement et de rétractation sur chaque axe (étape 104), et
- on corrige les valeurs de commande en déplacement du support d'outil (étape 105).

## Patentansprüche

1. Eichungsvorrichtung, die dazu bestimmt ist, auf einer Werkzeugmaschine befestigt zu werden, die einen Werkzeugträger umfasst, der zumindest in einer Ebene (X, Y), die durch eine erste und eine zweite senkrechte Achse (X, Y) zwischen ihnen definiert ist, beweglich steuerbar ist, umfassend einen Sockel (2, 20) und einen Positionsfühler (3), der dazu bestimmt ist, in dem Werkzeugträger montiert zu werden, **dadurch gekennzeichnet, dass** sie umfasst:
- mindestens drei Hauptmessklötze (C1, C2, C3), die an dem Sockel (2, 20) befestigt sind, wobei die Hauptmessklötze (C1, C2, C3) eine charakteristische Länge zwischen zwei entgegengesetzt liegenden Referenzflächen aufweisen, und
- wobei der Positionsfühler (3) die Position der Referenzflächen der Hauptmessklötze (C1, C2, C3) anzeigen kann, wobei die Hauptmessklötze (C1, C2, C3) räumlich auf dem Sockel (2, 20) angeordnet sind, so dass
- die charakteristische Länge des ersten Hauptmessklotzes (C1) zu einer ersten Achse (X) parallel ist,
- die charakteristische Länge des zweiten Hauptmessklotzes (C2) zu einer zweiten Achse (Y) senkrecht auf die erste Achse (X) parallel ist, und
- die charakteristische Länge des dritten Hauptmessklotzes (C3) in eine Richtung parallel zu einer Hypotenuse (H3) eines rechtwinkeligen Dreiecks eingeschrieben ist, dessen beiden anderen Seiten zu den ersten bzw. zweiten Achsen (X, Y) parallel sind.

2. Eichungsvorrichtung nach Anspruch 1, **dadurch gekennzeichnet, dass** sie einen Nebenmessklotz (C'1, C'2, C'3) umfasst, der auf mindestens einer Referenzseite eines Hauptmessklotzes (C1, C2, C3) aufliegt, wobei der Nebenmessklotz (C'1, C'2, C'3) quer über den Hauptmessklotz (C1, C2, C3) hinausragt, um eine Referenzfläche für den Positionsfühler (3) aufzuweisen.

3. Eichungsvorrichtung nach Anspruch 2, **dadurch gekennzeichnet, dass** sie zwei Nebenmessklötze (C'1, C'2, C'3) umfasst, die auf den beiden entgegengesetzt liegenden Referenzflächen mindestens eines Hauptmessklotzes (C1, C2, C3) aufliegen, und dass die Eichungsvorrichtung (1, 10) ferner einen Fühlerträger (5) aufweist, der ein erstes Ende (5a), das dazu bestimmt ist, in dem Werkzeugträger montiert zu werden, ein zweites Ende (5c), an dem der Positionsfühler (3) befestigt ist, und ein Biegegelenk (5b) zwischen den beiden Enden (5a, 5c) aufweist.

4. Eichungsvorrichtung nach einem der Ansprüche 2 oder 3, **dadurch gekennzeichnet, dass** der Nebenmessklotz (C'1, C'2, C'3) an dem Hauptmessklotz (C1, C2, C3) mit der Spitze einer Schraube einer Befestigungslasche (6) der Eichungsvorrichtung (1, 10) anliegend gehalten wird, wobei die Befestigungslasche (6) an den Hauptmessklotz (C1, C2, C3) geklebt ist.

5. Eichungsvorrichtung nach einem der Ansprüche 1 bis 4 für eine Werkzeugmaschine, die einen Werkzeugträger aufweist, der in Bewegung entlang einer ersten, einer zweiten Achse und einer dritten Achse, die aufeinander senkrecht stehen, (X, Y, Z) steuerbar ist, **dadurch gekennzeichnet, dass** sie sechs Hauptmessklötze (C1, C2, C3, C4, C5, C6) umfasst, die räumlich in den Sockel (20) angeordnet sind, so dass:
- die charakteristische Länge des vierten Hauptmessklotzes (C4) parallel zu einer dritten Achse (Z) senkrecht auf die erste und die zweite Achse (X, Y) ist,
- die charakteristische Länge des fünften Hauptmessklotzes (C5) in eine Richtung parallel zu einer Hypotenuse (H5) eines rechtwinkeligen Dreiecks eingeschrieben ist, dessen beiden anderen Seiten zu der ersten und dritten Achse (X, Z) parallel sind, und
- die charakteristische Länge des sechsten Hauptmessklotzes (C6) in eine Richtung parallel zu einer Hypotenuse (H6) eines rechtwinkeligen Dreiecks eingeschrieben ist, dessen beiden anderen Seiten zu der zweiten und dritten Achse (Y, Z) parallel sind.

6. Eichungsvorrichtung nach Anspruch 5, **dadurch gekennzeichnet, dass** der Sockel (20) einen ersten, einen zweiten und einen dritten Ständer (B1, B2, B3) aufweist, die zueinander orthogonal und in einer allgemeinen Übereckform angeordnet sind.

7. Eichungsvorrichtung nach einem der Ansprüche 1 bis 6, **dadurch gekennzeichnet, dass** die Hauptmessklötze (C1, C2, C3, C4, C5, C6) ein biegsames Mittel (8, 12) zur Verbindung mit dem Sockel (2, 20) aufweisen.

8. Eichungsvorrichtung nach einem der Ansprüche 1 bis 7, **dadurch gekennzeichnet, dass** der Sockel (2, 20) eine Positionierplatte (9) aufweist, die Zentriermittel umfasst, um die Eichungsvorrichtung (1, 10) an der Werkzeugmaschine zu positionieren.

9. Eichungsvorrichtung nach einem der vorhergehenden Ansprüche, **dadurch gekennzeichnet, dass** der Positionsfühler (3) ein Komparator ist.

10. Verfahren zur Eichung einer Werkzeugmaschine, **dadurch gekennzeichnet, dass**
- ein Positionsfühler in einem Werkzeugträger der Werkzeugmaschine montiert und die Eichungsvorrichtung nach einem der Ansprüche 1 bis 9 in einer zugänglichen Position am Werkzeugträger befestigt wird (Schritt 101),
- die Bewegung des Werkzeugträgers in eine erste Richtung X parallel zur charakteristischen Länge eines ersten Hauptmessklotzes C1 gesteuert wird, um den Wert der Bewegung des Werkzeugträgers zwischen zwei Referenzflächen der Messklotzanordnung zu bestimmen (Schritt 102),
- die Bewegung des Werkzeugträgers in die Richtung parallel zur charakteristischen Länge jedes Hauptmessklotzes reiteriert wird, um den Wert der Bewegung des Werkzeugträgers zwischen zwei Referenzflächen der Messklotzanordnung zu bestimmen (Schritt 102),
- die Verlängerungs- und Verkürzungsfehler auf jeder Achse auf Basis der Abweichung zwischen dem Wert der charakteristischen Länge der Messklotzanordnung und dem bestimmten Wert der Bewegung des Werkzeugträgers, die durch die Werkzeugmaschine gegeben ist, bestimmt werden (Schritt 103),
- der Winkelfehler unter Berücksichtigung der Verlängerungs- und Verkürzungsfehler auf jeder Achse bestimmt wird (Schritt 104), und
- die Bewegungssteuerungsfehler des Werkzeugträgers korrigiert werden (Schritt 105).

## Claims

1. Calibration device intended to be fixed to a machine tool having a tool holder, the movement of which in at least one plane (X, Y) defined by first and second mutually parallel axes (X, Y) is controllable, comprising a base (2, 20) and a position sensor (3) intended to be mounted in said tool holder, **characterized in that** it comprises:
- at least three main gauge blocks (C1, C2, C3) fixed to said base (2, 20), said main gauge blocks (C1, C2, C3) having a characteristic length between two opposite reference faces, and
- the position sensor (3) being able to indicate the position of the reference faces of the main gauge blocks (C1, C2, C3), said main gauge blocks (C1, C2, C3) being arranged spatially on the base (2, 20) such that:
- the characteristic length of the first main gauge block (C1) is parallel to a first axis (X),
- the characteristic length of the second main gauge block (C2) is parallel to a second axis (Y), perpendicular to the first axis (X), and
- the characteristic length of the third main gauge blog (C3) extends in a direction parallel to a hypotenuse (H3) of a right angled triangle, the two other sides of which are respectively parallel to the first and second axes (X, Y).

2. Calibration device according to Claim 1, **characterized in that** it comprises a secondary gauge block (C'1, C'2, C'3) pressed against at least one reference face of a main gauge block (C1, C2, C3), the secondary gauge block (C'1, C'2, C'3) protruding transversely beyond the main gauge block (C1, C2, C3) so as to present a reference face to the position sensor (3).

3. Calibration device according to Claim 2, **characterized in that** it comprises two secondary gauge blocks (C'1, C'2, C'3) pressed against the two opposite reference faces of at least one main gauge block (C1, C2, C3), and **in that** the calibration device (1, 10) also comprises a sensor holder (5) having a first end (5a) intended to be mounted in the tool holder, a second end (5c) to which the position sensor (3) is fixed, and an angled joint (5b) between the two ends (5a, 5c).

4. Calibration device according to either of Claims 2 and 3, **characterized in that** said secondary gauge block (C'1, C'2, C'3) is kept pressed against the main gauge block (C1, C2, C3) by the tip of a screw of a fixing tab (6) for said calibration device (1, 10), said fixing tab (6) being adhesively bonded to said main gauge block (C1, C2, C3).

5. Calibration device according to one of Claims 1 to 4, for a machine tool having a tool holder, the movement of which along first, second and third mutually perpendicular axes (X, Y, Z) is controllable, **characterized in that** it comprises six main gauge blocks (C1, C2, C3, C4, C5, C6) arranged spatially on the base (20) such that:
- the characteristic length of the fourth main gauge block (C4) is parallel to a third axis (Z) perpendicular to the first and the second axis (X, Y),
- the characteristic length of the fifth main gauge block (C5) extends in a direction parallel to a hypotenuse (H5) of a right angled triangle, the two other sides of which are parallel to the first and third axes (X, Z), and
- the characteristic length of the sixth main gauge block (C6) extends in a direction parallel to a hypotenuse (H6) of a right angled triangle, the two other sides of which are parallel to the second and third axes (Y, Z).

6. Calibration device according to Claim 5, **characterized in that** the base (20) has first, second and third mutually orthogonal beams (B1, B2, B3) which are arranged in the overall shape of a wedge.

7. Calibration device according to one of Claims 1 to 6, **characterized in that** said main gauge blocks (C1, C2, C3, C4, C5, C6) have a flexible joining means (8, 12) for joining to the base (2, 20).

8. Calibration device according to one of Claims 1 to 7, **characterized in that** the base (2, 20) comprises a positioning plate (9) having centring means for positioning said calibration device (1, 10) on the machine tool.

9. Calibration device according to one of the preceding claims, **characterized in that** the position sensor (3) is a comparator.

10. Method for calibrating a machine tool, **characterized in that**:
- a position sensor is mounted in a tool holder of the machine tool and the calibration device is fixed according to one of Claims 1 to 9 in a position accessible to the tool holder (step 101),
- the tool holder is made to move in a first direction X parallel to the characteristic length of a first main gauge block C1 in order to determine the value of the movement of the tool holder between two reference faces of the assembly of gauge blocks (step 102),
- the movement of the tool holder in the direction parallel to the characteristic length of each main gauge block is repeated in order to determine the value of the movement of the tool holder between two reference faces of the assembly of gauge blocks (step 102),
- extension and retraction defects are determined on each axis starting from the difference between the value of the characteristic length of the assembly of gauge blocks and the value determined from the movement of the tool holder given by the machine tool (step 103),
- the angle defect is determined taking into account the extension and retraction defects on each axis (step 104), and
- the values for controlling the movement of the tool holder are corrected (step 105).
